# EUROPEAN PATENT APPLICATION

(11) **EP 2 832 419 A1**
(43) Date of publication of application: **04.02.2015**
(21) Application number: 13767708.4
(22) Date of filing: 12.02.2013
(51) Int. Cl.: B01D 53/04, B01J 20/34, C01B 31/20

(54) **CARBON DIOXIDE RECOVERY SYSTEM**

(30) Priority: 26.03.2012 JP 2012068608
(71) Applicant: Hitachi, Ltd., Tokyo 100-8280 (JP)
(72) Inventor: SATO, Hiroki, Tokyo 100-8280 (JP); YOSHIKAWA, Kohei, Tokyo 100-8280 (JP); KANEEDA, Masato, Tokyo 100-8280 (JP); KANNO, Shuichi, Tokyo 100-8280 (JP)
(74) Representative: Beetz & Partner
(86) International application number: PCT/JP2013/053184
(87) International publication number: WO 2013/145899

(57) **Abstract**

In a CO₂ absorption tower in which a CO₂ sorbent is placed, a decrease in CO₂ sorption amount due to an increase in temperature in the absorption tower because of the CO₂ sorption reaction heat is prevented. In a CO₂ capture and separation system, which captures and separates CO₂ from a CO₂-containing gas, two or more different types of CO₂ sorbents are placed in an absorption tower.

## Description

### Technical Field

The present invention relates to a carbon dioxide (CO₂) capture and separation system using a carbon dioxide (CO₂) sorbent.

### Background Art

In order to prevent global warming, reduction in emission of carbon dioxide (CO₂) which has a great influence as a greenhouse gas has been demanded. As a specific method for preventing emission of CO₂, there is known a separation and recovery technique using an absorbent liquid, an adsorbent material, etc.

In an adsorption and separation technique disclosed in PTL 1, in order to adsorb and separate a specific component in a sample gas, first, the specific component is adsorbed on an adsorbent in an adsorption vessel in which the adsorbent is placed, and thereafter, the specific component is desorbed by heating and aerating the adsorption vessel having a given amount of the specific component adsorbed thereon, thereby regenerating the adsorbent.

In order to prevent a decrease in the gas purity of the recovered specific component, it is desirable to use steam which can be easily subjected to gas-liquid separation at normal temperature as a gas to be circulated. However, when the CO₂ sorbent is regenerated by circulating heated steam, the steam comes in contact with the CO₂ sorbent whose temperature is lower than the heated steam, whereby water in the form of a liquid may be generated by condensing the steam. Further, when the CO₂ sorbent is immersed in water, there is a fear that the CO₂ sorbent does not perform the function of sorbing CO₂.

Due to this, most CO₂ capture and separation systems which use a CO₂ sorbent and have been put to practical use do not employ a method in which heated steam is circulated when regenerating the CO₂ sorbent, but employ a method in which a difference in adsorption amount depending on pressure. For example, PTL 2 discloses a CO₂ capture and separation system using a difference in CO₂ sorption amount of a CO₂ sorbent caused by a change in pressure.

### Citation List]

### Patent Literature

PTL 1: JP-A-6-91127
PTL 2: JP-A-2009-220101

### Summary of Invention

### Technical Problem

An object of the invention is to prevent a decrease in CO₂ sorption amount with an increase in temperature in a CO₂ absorption tower caused by the CO₂ sorption reaction heat in a CO₂ capture and separation system in which CO₂ in a CO₂-containing gas is sorbed, and thereafter a regeneration gas at high temperature is circulated for regenerating a CO₂ sorbent to desorb CO₂.

### Solution to Problem

The invention is directed to a carbon dioxide capture and separation system, in which carbon dioxide is captured and separated by circulating a carbon dioxide-containing gas through a carbon dioxide absorption tower including a carbon dioxide sorbent to sorb carbon dioxide, and thereafter circulating a regeneration gas, which is a gas other than carbon dioxide, through the carbon dioxide absorption tower to desorb carbon dioxide from the carbon dioxide sorbent, characterized in that as the carbon dioxide sorbent, plural types of carbon dioxide sorbents, in which at least one of the temperature dependency of the carbon dioxide sorption amount and the carbon dioxide partial pressure dependency of the carbon dioxide sorption amount is different, are placed along the circulation direction of the carbon dioxide-containing gas from the upstream side to the downstream side of the carbon dioxide absorption tower.

Further, the carbon dioxide capture and separation system is characterized in that a desorption peak temperature at which the carbon dioxide desorption amount reaches the maximum is measured for each of the plural types of carbon dioxide sorbents under the same carbon dioxide partial pressure as that of the carbon dioxide-containing gas, and the plural types of carbon dioxide sorbents are placed in ascending order of the desorption peak temperature from the upstream side to the downstream side in the circulation direction of the carbon dioxide-containing gas in the carbon dioxide absorption tower.

Further, the carbon dioxide capture and separation system is characterized in that among the plural types of carbon dioxide sorbents to be placed in the carbon dioxide absorption tower, the carbon dioxide sorbent having the largest effective loading amount (A-B), which is a difference between the carbon dioxide sorption amount A at the same temperature as that of the regeneration gas and the carbon dioxide sorption amount B at the same temperature as that of the carbon dioxide-containing gas under the conditions that the carbon dioxide partial pressure is the same as that of the carbon dioxide-containing gas, is placed on the most upstream side in the circulation direction of the carbon dioxide-containing gas, the carbon dioxide sorbent having the largest effective loading amount (C-D), which is a difference between the carbon dioxide sorption amount C under the conditions that the carbon dioxide partial pressure is the same as that of the carbon dioxide-containing gas and the carbon dioxide sorbent temperature is 100°C and the carbon dioxide sorption amount D under the conditions that the carbon dioxide partial pressure is 50 kPa and the carbon dioxide sorbent temperature is the same as that of the regeneration gas, is placed on the most downstream side in the circulation direction of the carbon dioxide-containing gas, and the other carbon dioxide sorbents are placed in descending order of the effective loading amount (C-D) from the downstream side to the upstream side in the circulation direction of the carbon dioxide-containing gas.

Further, the carbon dioxide capture and separation system is characterized in that the carbon dioxide sorbent to be placed on the upstream side in the circulation direction of the carbon dioxide-containing gas is selected from at least one of zeolite, carbon having a high-specific surface area, silica, an MOF (Molecular Organic Framework), a ZIF (Zeolitic Imidasolate Framework), and an intercalation compound, and the carbon dioxide sorbent to be placed on the downstream side in the circulation direction of the carbon dioxide-containing gas is selected from at least one of an alkali metal oxide, an alkaline earth metal oxide, a lanthanoid oxide, a manganese oxide, alumina, titania, zirconia, yttria, and a composite oxide thereof.

Further, a carbon dioxide capture and separation system, in which carbon dioxide is captured and separated by circulating a carbon dioxide-containing gas through a carbon dioxide absorption tower including a carbon dioxide sorbent to sorb carbon dioxide, and thereafter circulating a regeneration gas, which is a gas other than carbon dioxide, through the carbon dioxide absorption tower to desorb carbon dioxide from the carbon dioxide sorbent, is characterized in that as the carbon dioxide sorbent, plural types of carbon dioxide sorbents, in which at least one of the temperature dependency of the carbon dioxide sorption amount and the carbon dioxide partial pressure dependency of the carbon dioxide sorption amount is different, are placed along the circulation direction of the carbon dioxide-containing gas from the upstream side to the downstream side of the carbon dioxide absorption tower, and regeneration gas flow lines through which the regeneration gas flows in a regeneration step in which carbon dioxide is separated from the carbon dioxide sorbent and carbon dioxide recovery lines through which desorbed carbon dioxide is recovered are placed in a direction intersecting the circulation direction of the carbon dioxide-containing gas in a sorption step in the carbon dioxide absorption tower.

Further, the carbon dioxide capture and separation system is characterized in that a partition plate which separates the regeneration gas flowing through each regeneration gas line from the regeneration gas flowing through the other regeneration gas lines in the regeneration step is movably placed between each two of the plural carbon dioxide sorbents.

### Advantageous Effects of Invention

According to the invention, in a carbon dioxide capture and separation system, in which carbon dioxide is captured and separated by circulating a carbon dioxide-containing gas through a carbon dioxide absorption tower including a carbon dioxide sorbent to sorb carbon dioxide, and thereafter circulating a regeneration gas, which is a gas other than carbon dioxide, through the carbon dioxide absorption tower to desorb carbon dioxide from the carbon dioxide sorbent, as the carbon dioxide sorbent, plural types of carbon dioxide sorbents, in which at least one of the temperature dependency of the carbon dioxide sorption amount and the carbon dioxide partial pressure dependency of the carbon dioxide sorption amount is different, are placed along the circulation direction of the carbon dioxide-containing gas from the upstream side to the downstream side of the carbon dioxide absorption tower, whereby a decrease in CO₂ sorption amount can be prevented even if the temperature in the absorption tower is increased by the sorption reaction heat when CO₂ is sorbed in the absorption tower.

### Brief Description of Drawings

[Fig. 1] Fig. 1 is a schematic view showing a CO₂ capture and separation system of the invention.
[Fig. 2A] Fig. 2A is a graph showing the desorption curve of a CO₂ sorbent A in Fig. 1.
[Fig. 2B] Fig. 2B is a graph showing the desorption curve of a CO₂ sorbent B in Fig. 1.
[Fig. 3] Fig. 3 is a graph showing a change in CO₂ sorption amount with respect to the temperature of a CO₂ sorbent.
[Fig. 4A] Fig. 4A is a schematic view showing a CO₂ capture and separation system in Example 1 of the invention.
[Fig. 4B] Fig. 4B is a graph showing the desorption curves of two types of CO₂ sorbents in Example 1 of the invention.
[Fig. 5] Fig. 5 is a graph showing a CO₂ sorption amount at a CO₂ partial pressure of 50 kPa in Example 1 of the invention.
[Fig. 6] Fig. 6 is a graph showing a CO₂ sorption amount at a CO₂ partial pressure of 100 kPa in Example 1 of the invention.
[Fig. 7] Fig. 7 is a schematic view showing a CO₂ capture and separation system in Example 2 of the invention.
[Fig. 8A] Fig. 8A is a graph showing the desorption curve of a CO₂ sorbent A in Fig. 3.
[Fig. 8B] Fig. 8B is a graph showing the desorption curve of a CO₂ sorbent B in Fig. 3.
[Fig. 8C] Fig. 8C is a graph showing the desorption curve of a CO₂ sorbent C in Fig. 3.
[Fig. 9] Fig. 9 is a schematic view showing a CO₂ capture and separation system in Example 3 of the invention.
[Fig. 10A] Fig. 10A is a graph showing the desorption curve of a CO₂ sorbent A in Fig. 6.
[Fig. 10B] Fig. 10B is a graph showing the desorption curve of a CO₂ sorbent B in Fig. 6.
[Fig. 10C] Fig. 10C is a graph showing the desorption curve of a CO₂ sorbent C in Fig. 6.
[Fig. 11] Fig. 11 is a schematic view showing a CO₂ capture and separation system in Comparative Example 1 of the invention.
[Fig. 12] Fig. 12 is a graph showing the desorption curve of a CO₂ sorbent 125 in Comparative Example 1.
[Fig. 13] Fig. 13 is a graph showing a CO₂ recovery rate with respect to the CO₂-containing gas circulation time in Comparative Example 1.
[Fig. 14] Fig. 14 is a schematic view showing changes over time in temperature distribution and CO₂ sorption amount distribution in a CO₂ absorption tower in Comparative Example 1.
[Fig. 15] Fig. 15 is a graph showing a CO₂ sorption amount with respect to the temperature of a CO₂ sorbent in Comparative Example 2.
[Fig. 16A] Fig. 16A is a graph showing the desorption curve of a CO₂ sorbent 130 in Comparative Example 3.
[Fig. 16B] Fig. 16B is a graph showing a CO₂ sorption amount in Comparative Example 3.

### Description of Embodiments

Hereinafter, Comparative Examples of the invention will be described, and next, Examples of the invention will be described in comparison with the Comparative Examples.

### [Comparative Example 1]

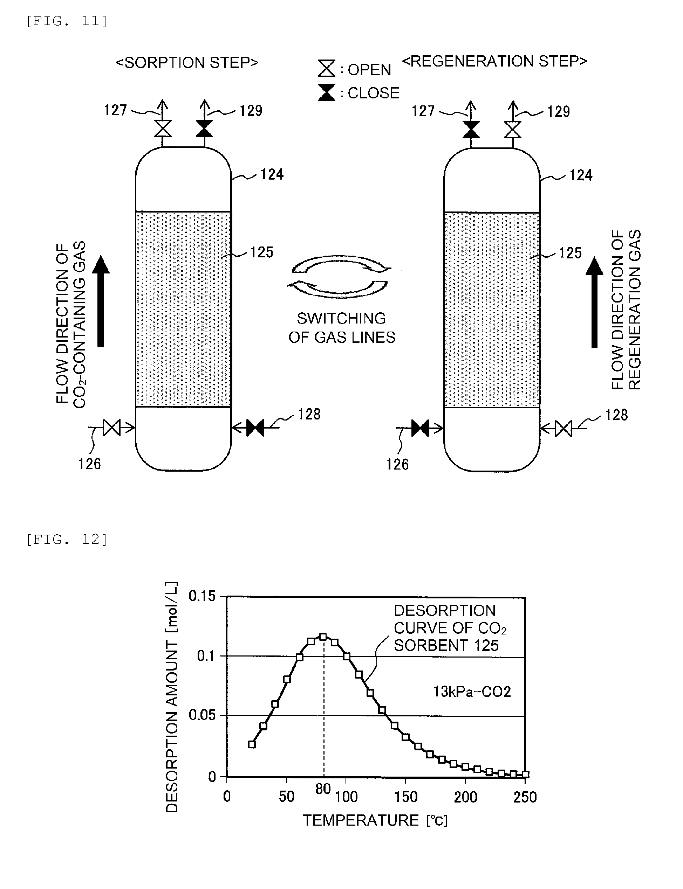

First, as Comparative Example 1, a CO₂ capture and separation system using one type of CO₂ sorbent shown in Fig. 11 will be described. In a CO₂ absorption tower 124 in Fig. 11, one type of CO₂ sorbent 125 is used.

In a sorption step, CO₂ in a CO₂-containing gas flowing through a CO₂-containing gas line 126 is sorbed by the CO₂ sorbent 125, and a CO₂-depleted gas is discharged through a CO₂-depleted gas line 127. The CO₂ sorbent 125 generates heat by a CO₂ sorption reaction when sorbing CO₂.

On the upstream side of the CO₂ absorption tower 124, first, the temperature of the CO₂ sorbent 125 is increased by the CO₂ sorption reaction. However, when the sorption amount approaches a saturation level, the CO₂ sorbent 125 is always in contact with the CO₂-containing gas, and therefore is cooled to the temperature of the CO₂-containing gas. On the other hand, on the downstream side of the CO₂ absorption tower 124, the CO₂-containing gas heated by the CO₂ sorption reaction heat gradually flows in, and also the CO₂ sorption reaction starts later than on the upstream side, and therefore, the temperature is increased later than on the upstream side.

A CO₂ recovery rate, a temperature in the CO₂ absorption tower, and a change in CO₂ sorption amount over time when a material showing a desorption curve indicated in Fig. 12 was used as the CO₂ sorbent 125 were calculated. However, as the respective conditions for the calculation, the values shown in Tables 1 to 3 were used.
[Table 1]

**Table 1**

| Conditions for CO₂ sorbent | | | |
|---|---|---|---|
| Sorption reaction energy | Volume of sorbent | Heat capacity of sorbent | Initialsorbent temperature |
| 40 kJ/mol | 1500 m³ | 400 J/kg/K | 50°C |

[Table 2]

**Table 2**

| Conditions for CO₂-containing gas | | |
|---|---|---|
| Flow rate | Temperature | Pressure |
| 375000 Nm³/h | 50°C | 0.1 MPa |

[Table 3]

**Table 3**

| Concentration conditions for CO₂-containing gas | | | |
|---|---|---|---|
| CO₂ | H₂O | N₂ | O₂ |
| 13% | 12% | 72% | 3% |

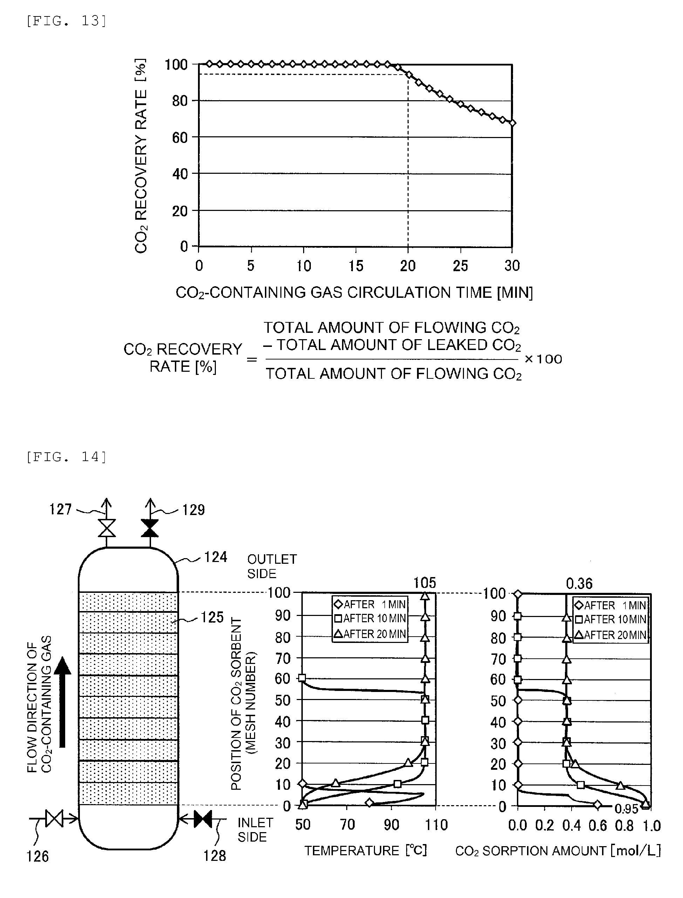

Fig. 13 shows a CO₂ recovery rate with respect to the CO₂-containing gas circulation time. Here, the CO₂ recovery rate is expressed as a percentage obtained by subtracting the amount of leaked CO₂ from the amount of CO₂ flowing in the CO₂ absorption tower, and then dividing the resulting value by the amount of CO₂ flowing in the CO₂ absorption tower.

It is found that when the CO₂ recovery rate is set to, for example, 90% or more, the CO₂-containing gas circulation time is desirably 20 minutes or less in the case where the CO₂ sorbent performance and the volume of the sorbent are as set forth above.

Next, changes over time in temperature distribution and CO₂ sorption amount with respect to the position of the CO₂ sorbent in the CO₂ absorption tower 124 are shown in Fig. 14. After 20 minutes passed, the temperature of about 70% of the CO₂ sorbent was increased to 105°C, and accompanying this, the CO₂ sorption amount was decreased to 0.36 mol/L. On the other hand, it was confirmed that in a portion close to the inlet, after the sorption amount reached a saturation level, the CO₂ sorbent was cooled with the CO₂-containing gas, and therefore, the temperature of the CO₂ sorbent was decreased to 50°C which was the same as the temperature of the CO₂-containing gas.

These results revealed that CO₂ can be sorbed at 0.95 mol/L at 50°C, however, when the temperature is increased to 105°C, CO₂ can be sorbed only at 0.36 mol/L, which is less than half the value obtained at 50°C.

### [Comparative Example 2]

In Comparative Example 2, an effective loading amount when the CO₂ sorbent 125 is used is calculated. The effective loading amount is expressed as a difference between the CO₂ sorption amount in the sorption step and the CO₂ sorption amount in the regeneration step.

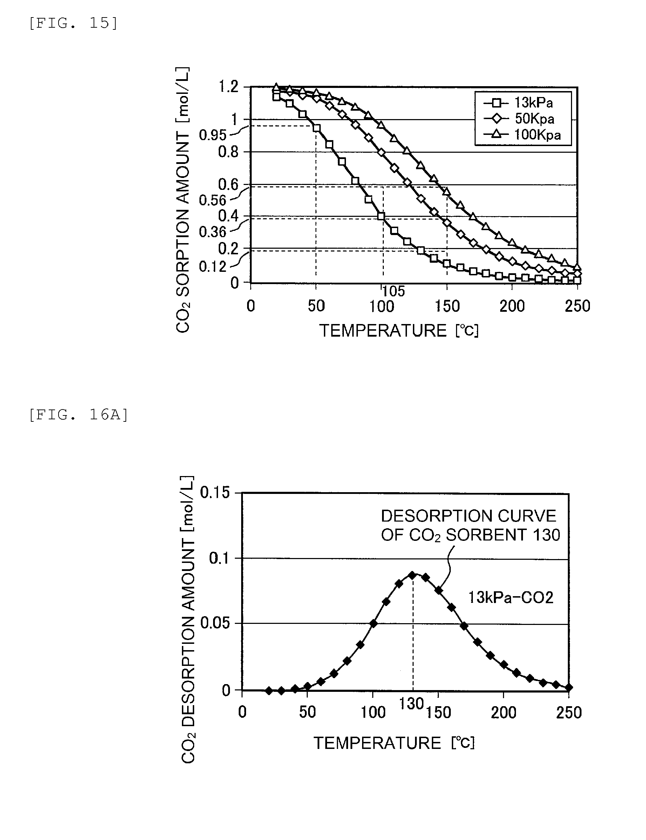

Fig. 15 shows a graph indicating a CO₂ sorption amount with respect to the temperature of the CO₂ sorbent 125. As calculated in Comparative Example 1, the CO₂ sorption amount in the sorption step is 0.95 mol/L under the conditions on the upstream side of the CO₂ absorption tower (CO₂ sorbent temperature: 50°C, CO₂ partial pressure: 13 kPa) and 0.36 mol/L under the conditions on the downstream side from the midstream portion of the CO₂ absorption tower (CO₂ sorbent temperature: 105°C, CO₂ partial pressure: 13 kPa).

In the regeneration step, the regeneration gas temperature was set to 150°C, and the CO₂ partial pressure in the regeneration gas was set to 13 kPa. In the regeneration step, the CO₂ partial pressure on the downstream side from the midstream portion of the CO₂ absorption tower 124 is increased by CO₂ desorbed from the CO₂ sorbent 125 on the upstream side of the CO₂ absorption tower 124. The amount of desorbed CO₂, that is, the effective loading amount which is the amount of actually recovered CO₂ was calculated for the case where the CO₂ partial pressure on the downstream side from the midstream portion was increased to 50 kPa and the case where the CO₂ partial pressure was increased to 100 kPa.

First, the effective loading amount in the case where the CO₂ partial pressure on the downstream side from the midstream portion in the regeneration step is increased to 50 kPa is calculated based on Fig. 12. As described above, the CO₂ sorption amount in the sorption step is 0.95 mol/L on the upstream side of the CO₂ absorption tower and 0.36 mol/L on the downstream side from the midstream portion thereof. The CO₂ partial pressure on the upstream side of the CO₂ absorption tower in the regeneration step is 13 kPa and the CO₂ sorbent temperature is 150°C, and therefore, the CO₂ sorption amount is 0.12 mol/L. On the other hand, the CO₂ partial pressure on the downstream side of the CO₂ absorption tower in the regeneration step is 50 kPa and the CO₂ sorbent temperature is 150°C, and therefore, the CO₂ sorption amount is 0.36 mol/L.

Accordingly, the effective loading amounts on the upstream side and on the downstream side from the midstream portion are 0.83 mol/L and 0.00 mol/L, respectively. That is, it is found that CO₂ is not desorbed on the downstream side from the midstream portion in the regeneration step. The above results are summarized in Table 4.
[Table 4]

**Table 4**

| CO₂ sorption amount and desorption amount when CO₂ partial pressure on downstream side from midstream portion is 50 kPa | | |
|---|---|---|
| | Upstream side | Downstream side from midstream portion |
| Sorption amount in sorption step | 0.95 mol/L | 0.36 mol/L |
| Sorption amount in regeneration step | 0.12 mol/L | 0.36 mol/L |
| Effective loading amount | 0.83 mol/L | 0.00 mol/L |

Similarly, the effective loading amount in the case where the CO₂ partial pressure on the downstream side from the midstream portion in the regeneration step is increased to 100 kPa is calculated based on Fig. 15. The CO₂ sorption amount in the sorption step is 0.95 mol/L on the upstream side of the CO₂ absorption tower and 0.36 mol/L on the downstream side from the midstream portion thereof. The CO₂ partial pressure on the upstream side of the CO₂ absorption tower in the regeneration step is 13 kPa and the CO₂ sorbent temperature is 150°C, and therefore, the CO₂ sorption amount is 0.12 mol/L. On the other hand, the CO₂ partial pressure on the downstream side of the CO₂ absorption tower in the regeneration step is 100 kPa and the CO₂ sorbent temperature is 150°C, and therefore, the CO₂ sorption amount is 0.56 mol/L.

Accordingly, the effective loading amounts on the upstream side and on the downstream side from the midstream portion are 0.83 mol/L and -0.20 mol/L, respectively. That is, it is found that CO₂ desorbed on the upstream side is resorbed on the downstream side from the midstream portion in the regeneration step. The above results are summarized in Table 5.
[Table 5]

**Table 5**

| CO₂ sorption amount and desorption amount when CO₂ partial pressure on downstream side from midstream portion is 100 kPa | | |
|---|---|---|
| | Upstream side | Downstream side from midstream portion |
| Sorption amount in sorption step | 0.95 mol/L | 0.36 mol/L |
| Sorption amount in regeneration step | 0.12 mol/L | 0.56 mol/L |
| Effective loading amount | 0.83 mol/L | -0.20 mol/L |

### [Comparative Example 3]

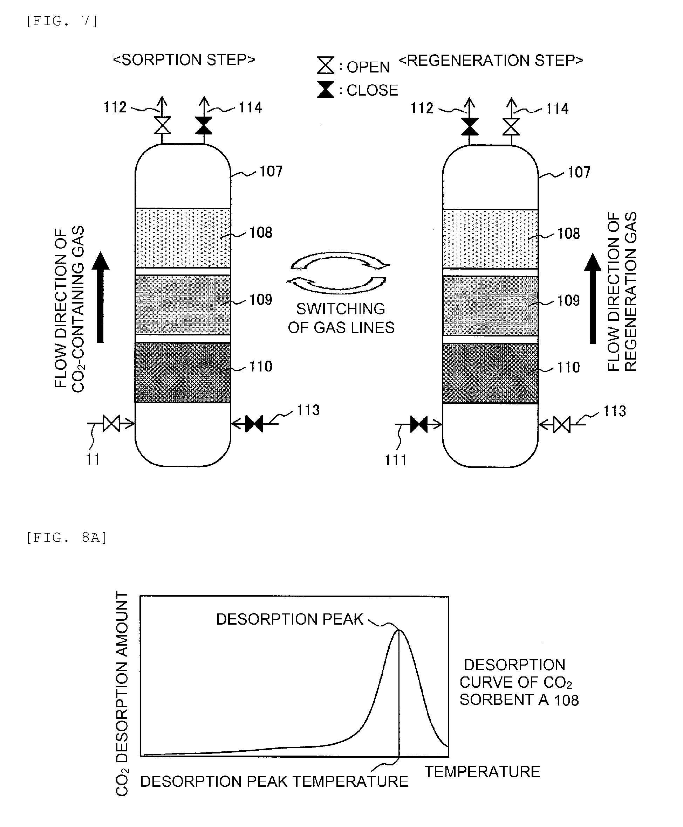

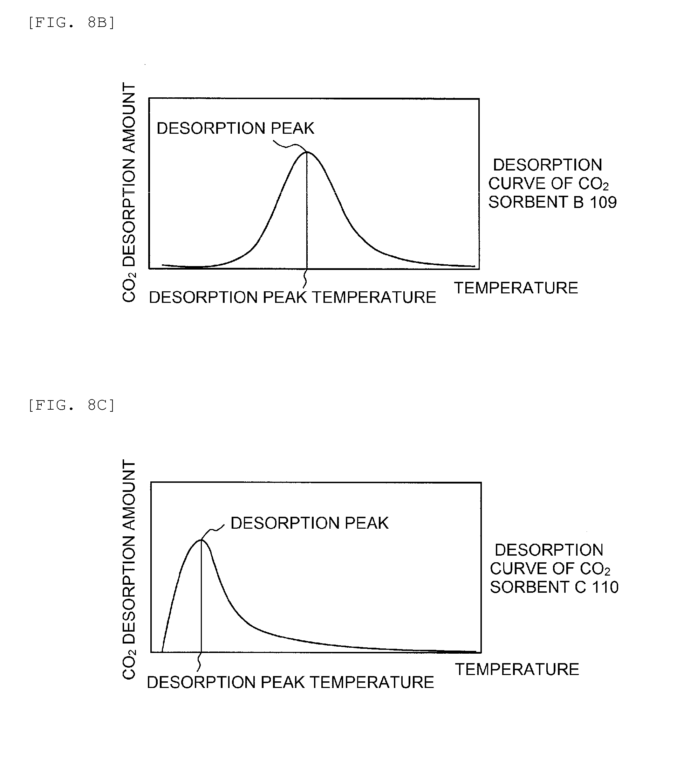

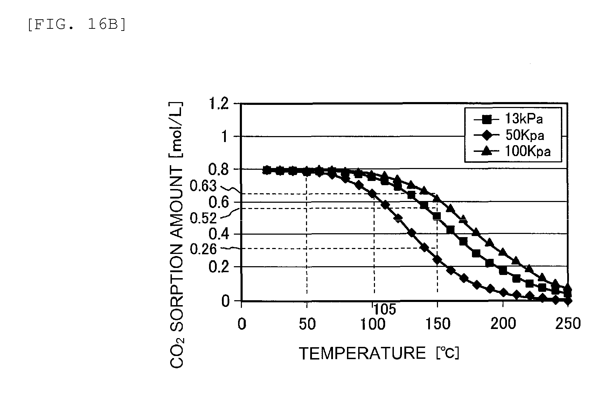

In Comparative Example 3, an effective loading amount when a CO₂ sorbent 130 is used in the CO₂ absorption tower 124 shown in Fig. 8 is calculated. Fig. 16A shows a graph indicating the desorption curve of the CO₂ sorbent 130, and Fig. 16B shows a graph indicating the CO₂ sorption amount with respect to the temperature. In the same manner as in Comparative Examples 1 and 2, the CO₂ partial pressure in the CO₂-containing gas is set to 13 kPa, and the temperature thereof is set to 50°C. Further, it was assumed that the temperature on the downstream side from the midstream portion of the CO₂ absorption tower 124 in the sorption step is increased to 105°C in the same manner as in Comparative Examples 1 and 2.

Based on the graph indicating the CO₂ sorption amount with respect to the temperature shown in Fig. 16B, the CO₂ sorption amount in the sorption step is 0.80 mol/L under the conditions on the upstream side of the CO₂ absorption tower (CO₂ sorbent temperature: 50°C, CO₂ partial pressure: 13 kPa) and 0.63 mol/L under the conditions on the downstream side from the midstream portion of the CO₂ absorption tower (CO₂ sorbent temperature: 105°C, CO₂ partial pressure: 13 kPa).

In the regeneration step, the regeneration gas temperature is set to 150°C, and the CO₂ partial pressure in the regeneration gas is set to 13 kPa. Further, in the regeneration step, the CO₂ partial pressure on the downstream side from the midstream portion of the CO₂ absorption tower 124 is increased by CO₂ desorbed from the CO₂ sorbent 125 on the upstream side of the CO₂ absorption tower 124. The amount of desorbed CO₂, that is, the effective loading amount was calculated for the case where the CO₂ partial pressure on the downstream side from the midstream portion was increased to 50 kPa and the case where the CO₂ partial pressure was increased to 100 kPa.

First, the effective loading amount in the case where the CO₂ partial pressure on the downstream side from the midstream portion in the regeneration step is increased to 50 kPa is calculated based on Fig. 16B. As described above, the CO₂ sorption amount in the sorption step is 0.80 mol/L on the upstream side of the CO₂ absorption tower and 0.63 mol/L on the downstream side from the midstream portion thereof. The CO₂ partial pressure on the upstream side of the CO₂ absorption tower in the regeneration step is 13 kPa and the CO₂ sorbent temperature is 150°C, and therefore, the CO₂ sorption amount is 0.26 mol/L. On the other hand, the CO₂ partial pressure on the downstream side of the CO₂ absorption tower in the regeneration step is 50 kPa and the CO₂ sorbent temperature is 150°C, and therefore, the CO₂ sorption amount is 0.52 mol/L.

Accordingly, the effective loading amounts on the upstream side and on the downstream side from a midstream portion are 0.54 mol/L and 0.11 mol/L, respectively. The above results are summarized in Table 6.
[Table 6]

**Table 6**

| CO₂ sorption amount and desorption amount when CO₂ partial pressure on downstream side from midstream portion is 50 kPa | | |
|---|---|---|
| | Upstream side | Downstream side from midstream portion |
| Sorption amount in sorption step | 0.80 mol/L | 0.63 mol/L |
| Sorption amount in regeneration step | 0.26 mol/L | 0.52 mol/L |
| Effective loading amount | 0.54 mol/L | 0.11 mol/L |

Similarly, the effective loading amount in the case where the CO₂ partial pressure on the downstream side from the midstream portion in the regeneration step is increased to 100 kPa is calculated based on Fig. 16B. The CO₂ sorption amount in the sorption step is 0.80 mol/L on the upstream side of the CO₂ absorption tower and 0.63 mol/L on the downstream side from the midstream portion thereof. The CO₂ partial pressure on the upstream side of the CO₂ absorption tower in the regeneration step is 13 kPa and the CO₂ sorbent temperature is 150°C, and therefore, the CO₂ sorption amount is 0.26 mol/L.

On the other hand, the CO₂ partial pressure on the downstream side of the CO₂ absorption tower in the regeneration step is 100 kPa and the CO₂ sorbent temperature is 150°C, and therefore, the CO₂ sorption amount is 0.63 mol/L.

Accordingly, the effective loading amounts on the upstream side and on the downstream side from the midstream portion are 0.54 mol/L and 0.00 mol/L, respectively. That is, it is found that CO₂ is not desorbed on the downstream side from the midstream portion in the regeneration step. The above results are summarized in Table 7.
[Table 7]

**Table 7**

| CO₂ sorption amount and desorption amount when CO₂ partial pressure on downstream side from midstream portion is 100 kPa | | |
|---|---|---|
| | Upstream side | Downstream side from midstream portion |
| Sorption amount in sorption step | 0.80 mol/L | 0.63 mol/L |
| Sorption amount in regeneration step | 0.26 mol/L | 0.63 mol/L |
| Effective loading amount | 0.54 mol/L | 0.00 mol/L |

Next, the configuration of the invention will be described with reference to Examples.

### [Basic Configuration of Invention]

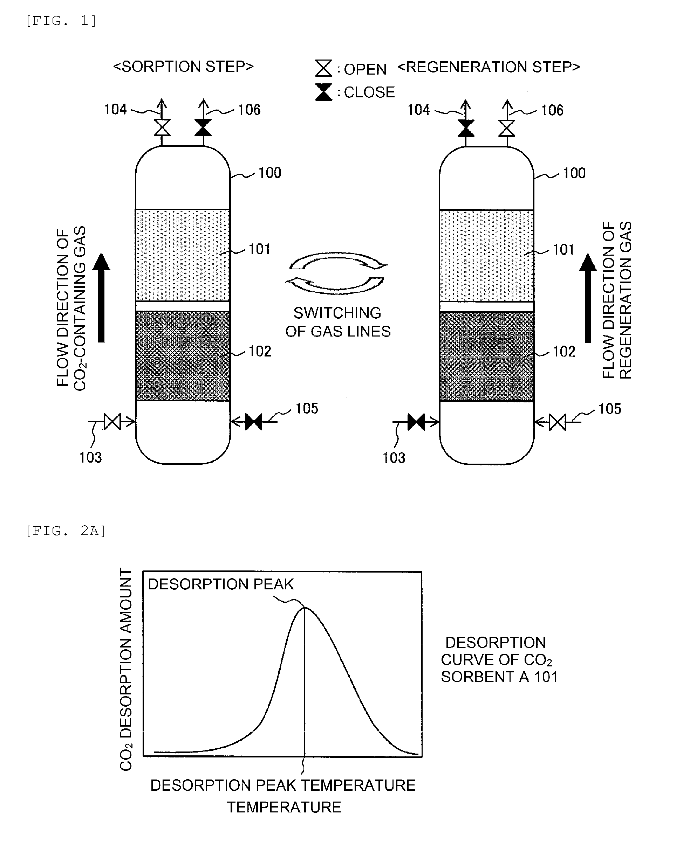

The basic mode for carrying out the invention will be described by taking a CO₂ absorption tower 100 as an example. Fig. 1 is a schematic view showing a CO₂ capture and separation system of the invention. On the left side of Fig. 1, a CO₂ absorption tower in a sorption step in which CO₂ is sorbed is shown. On the right side of Fig. 1, a step of regenerating a CO₂ sorbent in which CO₂ is desorbed is shown. These two steps are carried out by switching gas lines.

In the sorption step, a CO₂-containing gas flowing through a CO₂-containing gas line 103 flows in the CO₂ absorption tower 100. The CO₂-containing gas comes in contact with a CO₂ sorbent B 102 and a CO₂ sorbent A 101 to sorb CO₂, and is discharged through a CO₂-depleted gas line 104 as a CO₂-depleted gas. Further, in the regeneration step, a regeneration gas flows in the CO₂ absorption tower 100 through a regeneration gas line 105 and comes in contact with the CO₂ sorbent B 102 and the CO₂ sorbent A 101 to desorb CO₂, and the desorbed CO₂ is recovered through a CO₂ recovery line 106.

In the sorption step, by the reaction heat of the CO₂ sorption reaction, the temperature of the CO₂ sorbent A 101 and the CO₂ sorbent B 102 in the CO₂ absorption tower 100 is increased. The generated heat is transferred to the downstream side of the CO₂ absorption tower 100 by the flow of the circulating CO₂-containing gas. Since the temperature on the downstream side is increased to higher temperature than on the upstream side, it is desirable that the CO₂ sorbent A 101 to be placed on the downstream side has a larger CO₂ sorption amount at high temperature than the CO₂ sorbent B 102 to be placed on the upstream side.

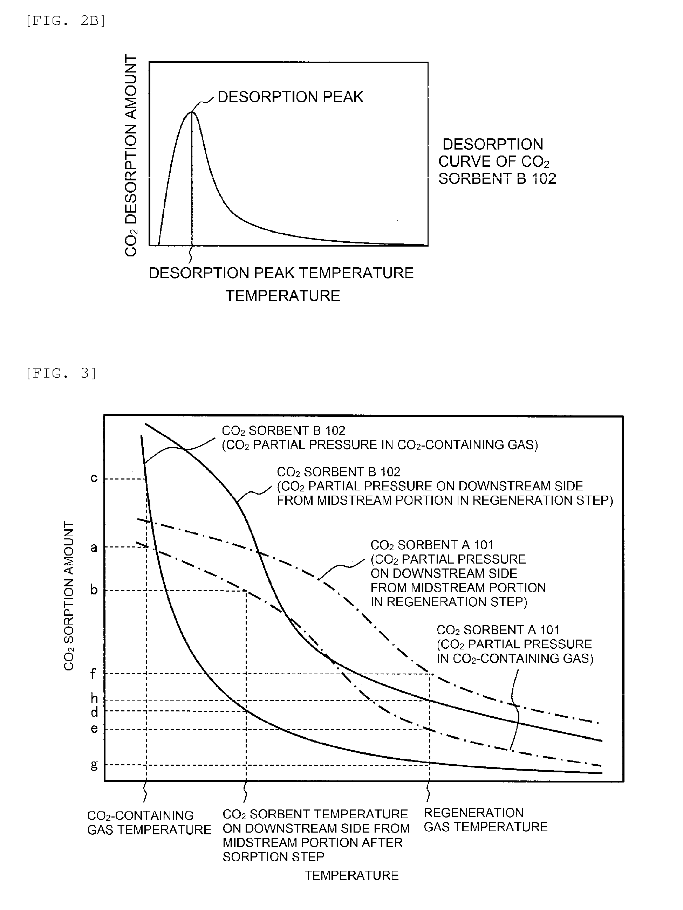

As the CO₂ sorbent A 101 and the CO₂ sorbent B 102, materials showing a temperature-programmed desorption curve as indicated in Figs. 2A and 2B are suitable. That is, by using a CO₂ sorbent having a peak temperature at which the CO₂ desorption amount reaches the maximum (hereinafter referred to as "desorption peak temperature") higher than the CO₂ sorbent B 102 to be placed on the upstream side as the CO₂ sorbent A 101 to be placed on the downstream side of the absorption tower, a decrease in CO₂ sorption amount can be prevented also on the downstream side where the temperature is increased to higher temperature than on the upstream side.

### [Selection of CO₂ Sorbent and Effective Loading Amount]

As for a method for selecting plural CO₂ sorbents to be placed, an evaluation can be made simply based on the order of the above-described desorption peak temperature, however, it is most desirable that an evaluation is made based on the effective loading amount in consideration also of the regeneration step. Here, the effective loading amount is expressed as a difference between the CO₂ sorption amount in the sorption step and the CO₂ sorption amount in the regeneration step. An explanation will be made by using a graph showing the CO₂ sorption amount with respect to the temperature of the CO₂ sorbent A 101 and the CO₂ sorbent B 102 shown in Fig. 3.

In the sorption step, CO₂ in the CO₂-containing gas flowing through the CO₂-containing gas line 103 is sorbed by the two types of the CO₂ sorbent A 101 and the CO₂ sorbent B 102, and the CO₂-depleted gas is discharged through the CO₂-depleted gas line 104. When CO₂ is sorbed, CO₂ sorption reaction heat is generated. On the upstream side of the CO₂ absorption tower 100, the temperature is increased by the CO₂ sorption reaction when the sorption step is started. However, when the sorption step is terminated, the CO₂ sorbent placed on the upstream side is cooled to the temperature of the CO₂-containing gas due to the contact with the CO₂-containing gas. On the other hand, the temperature of the CO₂ sorbent placed on the downstream side from a midstreamportion is higher than that of the CO₂-containing gas on the upstream side due to the sorption reaction heat.

That is, the CO₂ sorbent temperature when the sorption step is terminated is roughly divided into the CO₂-containing gas temperature on the upstream side and the CO₂ sorbent temperature on the downstream side from the midstream portion. Further, the CO₂ partial pressure when the sorption step is terminated is equal to the CO₂ partial pressure in the CO₂-containing gas because the CO₂ sorption reaction is almost completed. Therefore, based on Fig. 3, in the case where the CO₂ sorbent A 101 is used, the CO₂ sorption amount on the upstream side is a, and the CO₂ sorption amount on the downstream side from the midstream portion is b, and in the case where the CO₂ sorbent B 102 is used, the CO₂ sorption amount on the upstream side is c, and the CO₂ sorption amount on the downstream side from the midstream portion is d.

In the regeneration step shown in Fig. 1, by circulating the regeneration gas in the CO₂ absorption tower 100 through the regeneration gas line 105, CO₂ sorbed by the CO₂ sorbent A 101 and the CO₂ sorbent B 102 is desorbed. In order to accelerate the CO₂ desorption reaction at this time, the temperature of the regeneration gas is desirably higher than that of the CO₂-containing gas for heating the CO₂ sorbent. The temperature of the regeneration gas is more desirably higher than the CO₂ sorbent temperature on the downstream side from the midstream portion in the sorption step.

When focusing on the CO₂ partial pressure in the regeneration step, by desorbing CO₂ from the CO₂ sorbent on the upstream side, the CO₂ partial pressure on the upstream side becomes substantially the same as the CO₂ partial pressure in the regeneration gas, however, the CO₂ partial pressure on the downstream side from a midstream portion is increased. If enough time can be spent for the regeneration step, the CO₂ partial pressure on the downstream side from the midstream portion becomes substantially the same as the CO₂ partial pressure in the regeneration gas eventually. However, in fact, enough time cannot be spent, and therefore, the CO₂ partial pressure on the downstream side from the midstream portion is higher than the CO₂ partial pressure in the regeneration gas when the regeneration step is terminated. Here, an explanation will be made assuming that the CO₂ partial pressure in the regeneration gas is the same as the CO₂ partial pressure in the CO₂-containing gas.

### [Selection based on Effective Loading Amount]

Based on Fig. 3, when the regeneration step is terminated, in the case where the CO₂ sorbent A 101 is used, the CO₂ sorption amount on the upstream side is e and the CO₂ sorption amount on the downstream side from the midstream portion is f, and in the case where the CO₂ sorbent B 102 is used, the CO₂ sorption amount on the upstream side is g and the CO₂ sorption amount on the downstream side from the midstream portion is h.

The above results can be summarized as follows. In the case where the CO₂ sorbent A 101 is used, the effective loading amount on the upstream side is (a-e), and the effective loading amount on the downstream side from the midstream portion is (b-f). On the other hand, in the case where the CO₂ sorbent B 102 is used, the effective loading amount on the upstream side is (c-g), and the effective loading amount on the downstream side from the midstream portion is (d-h).

In order to recover CO₂ as much as possible by one cycle of the sorption step and the regeneration step, it is desirable to place a CO₂ sorbent having a large effective loading amount at each site on the upstream side and on the downstream side from the midstream portion. That is, since the effective loading amount on the upstream side satisfies the following relational formula: (c-g) > (a-e), it is desirable to place the CO₂ sorbent B 102, and since the effective loading amount on the downstream side from the midstream portion satisfies the following relational formula: (b-f) > (d-h), it is desirable to place the CO₂ sorbent A 101.

### [CO₂ Sorbent Temperature and CO₂ Partial Pressure]

More specifically, although depending on the material and the amount to be placed, the CO₂ sorbent temperature on the downstream side from the midstream portion when the sorption step is terminated is increased by 30 to 100°C as compared with when the sorption step is started, and the CO₂ partial pressure on the downstream side from the midstream portion when the regeneration step is terminated is increased by 10 to 100 kPa. If the CO₂ sorbent temperature when the sorption step is started is set to 50°C and the CO₂ partial pressure in the sorption step and the regeneration step is set to 13 kPa, the CO₂ sorbent temperature on the downstream side from the midstream portion when the sorption step is terminated is increased to 80 to 150°C and the CO₂ partial pressure on the downstream side from the midstream portion when the regeneration step is terminated is increased to 23 to 113 kPa.

Therefore, as the conditions for comparing the effective loading amounts of two or more types of CO₂ sorbents, it is most desirable to adopt the following conditions: the temperature on the downstream side from the midstream portion when the sorption step is terminated is 100°C and the CO₂ partial pressure on the downstream side from the midstream portion when the regeneration step is terminated is 50 kPa.

### [Example 1]

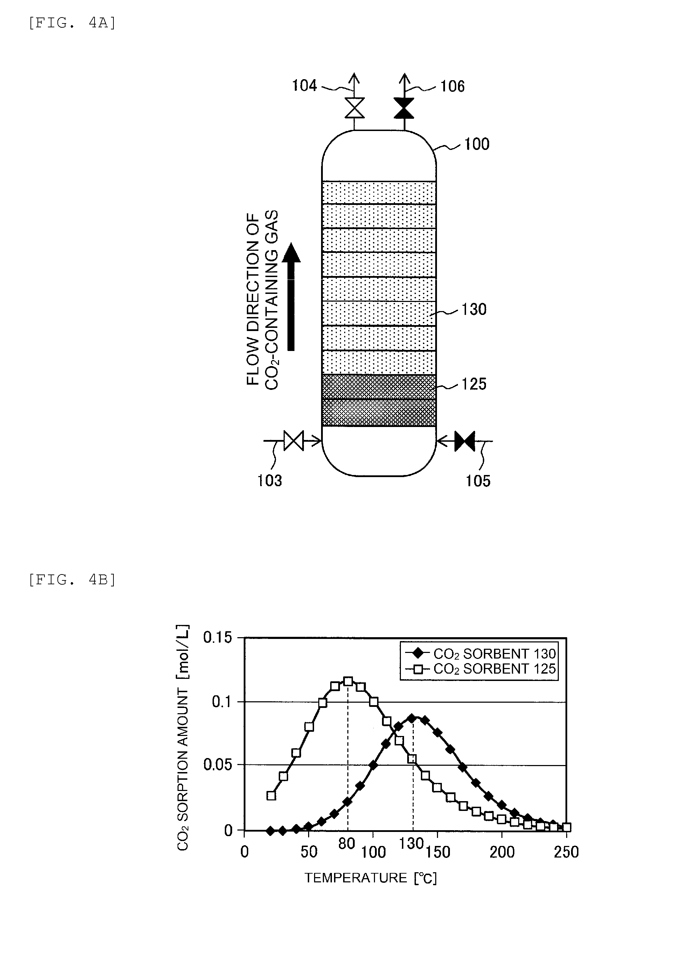

In Example 1, an effective loading amount is calculated in the case where the two types of the CO₂ sorbent 125 and the CO₂ sorbent 130 described in Comparative Examples 2 and 3 are used in a CO₂ absorption tower shown in Fig. 4A.

In Fig. 4B, the desorption curves of the CO₂ sorbent 125 and the CO₂ sorbent 130 are shown together. The volume of the CO₂ sorbents is set to the same value as in Comparative Examples 1 to 3.

As shown in Fig. 4A, the CO₂ sorbent 125 is placed up to a position of 20% of the volume of the CO₂ absorption tower 100 from the upstream side, and the CO₂ sorbent 130 is placed in the remaining 80% of the volume of the CO₂ absorption tower 100 on the downstream side from the midstream portion. In the same manner as in Comparative Examples 1 to 3, the CO₂ partial pressure in the CO₂-containing gas is set to 13 kPa, and the temperature thereof is set to 50°C. Further, in the sorption step, the temperature on the downstream side from the midstream portion of the tower is assumed to be increased to 105°C in the same manner as in Comparative Examples 1 to 3.

It is supposed that in the regeneration step, the regeneration gas temperature is 150°C, and the CO₂ partial pressure in the regeneration gas is 13 kPa in the same manner as in Comparative Examples 1 to 3. Further, in the regeneration step, by CO₂ desorbed from the CO₂ sorbent 125 on the upstream side of the CO₂ absorption tower 124, the CO₂ partial pressure on the downstream side from the midstream portion of the CO₂ absorption tower 100 is increased. The amount of desorbed CO₂, that is, the effective loading amount was calculated for the case where the CO₂ partial pressure on the downstream side from the midstream portion was increased to 50 kPa and the case where the CO₂ partial pressure was increased to 100 kPa.

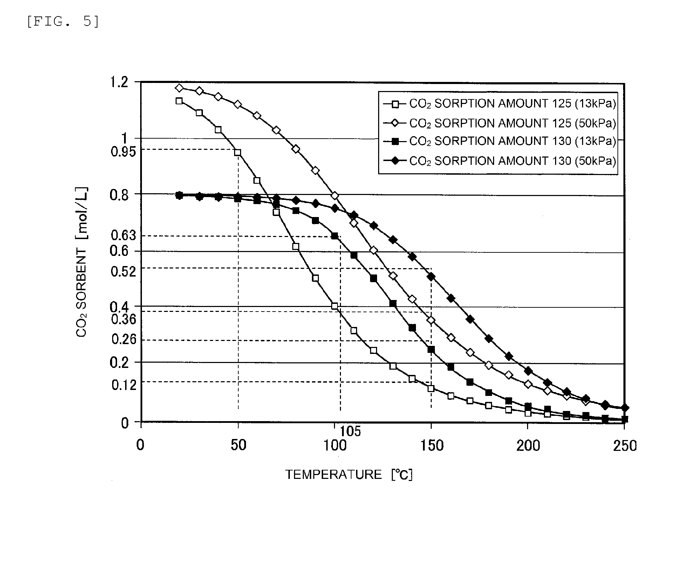

First, in the regeneration step, the effective loading amount in the case where the CO₂ partial pressure on the downstream side from the midstream portion is increased to 50 kPa is calculated based on Fig. 5. The CO₂ sorption amount in the sorption step is 0.95 mol/L on the upstream side of the CO₂ absorption tower because the CO₂ sorbent 125 is used, and 0.63 mol/L on the downstream side from the midstream portion thereof because the CO₂ sorbent 130 is used.

The CO₂ partial pressure on the upstream side of the CO₂ absorption tower in the regeneration step is 13 kPa and the CO₂ sorbent temperature is 150°C, and therefore, the CO₂ sorption amount of the CO₂ sorbent 125 placed on the upstream side is 0.12 mol/L. On the other hand, the CO₂ partial pressure on the downstream side of the CO₂ absorption tower is 50 kPa and the CO₂ sorbent temperature is 150°C, and therefore, the CO₂ sorption amount of the CO₂ sorbent 130 placed on the downstream side from the midstream portion is 0.52 mol/L. Accordingly, the effective loading amounts on the upstream side and on the downstream side from the midstream portion are 0.83 mol/L and 0.11 mol/L, respectively.

The above results are summarized in Table 8. It is found that the effective loading amount on the downstream side from the midstream portion is increased in Example 1 as compared with Table 4 of Comparative Example 2, and the effective loading amount on the upstream side is increased in Example 1 as compared with Table 6 of Comparative Example 3. Therefore, the total effective loading amount can be increased in the case where two types of CO₂ sorbents are placed as compared with the case where one type of CO₂ sorbent is used as in Comparative Examples 2 and 3.
[Table 8]

**Table 8**

| CO₂ sorption amount and desorption amount when CO₂ partial pressure on downstream side from midstream portion is 50 kPa | | |
|---|---|---|
| | Upstream side | Downstream side from midstream portion |
| Sorption amount in sorption step | 0.95 mol/L | 0.63 mol/L |
| Sorption amount in regeneration step | 0.12 mol/L | 0.52 mol/L |
| Effective loading amount | 0.83 mol/L | 0.11 mol/L |

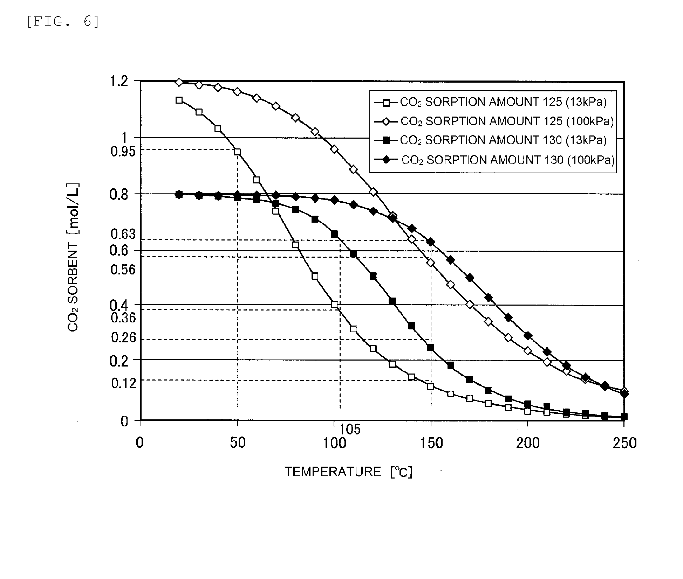

Similarly, in the regeneration step, the effective loading amount in the case where the CO₂ partial pressure on the downstream side from the midstream portion is increased to 100 kPa is calculated based on Fig. 6. The CO₂ sorption amount in the sorption step is 0.95 mol/L on the upstream side of the CO₂ absorption tower because the CO₂ sorbent 125 is used, and 0.63 mol/L on the downstream side from the midstream portion thereof because the CO₂ sorbent 130 is used.

The CO₂ partial pressure on the upstream side of the CO₂ absorption tower in the regeneration step is 13 kPa and the CO₂ sorbent temperature is 150°C, and therefore, the CO₂ sorption amount of the CO₂ sorbent 125 placed on the upstream side is 0.12 mol/L. On the other hand, the CO₂ partial pressure on the downstream side of the CO₂ absorption tower is 100 kPa and the CO₂ sorbent temperature is 150°C, and therefore, the CO₂ sorption amount of the CO₂ sorbent 130 placed on the downstream side from the midstream portion is 0.63 mol/L. Accordingly, the effective loading amounts on the upstream side and on the downstream side from the midstream portion are 0.83 mol/L and 0.00 mol/L, respectively.

The above results are summarized in Table 9. It is found that the effective loading amount on the downstream side from the midstream portion is increased in Example 1 as compared with Table 5 of Comparative Example 2, and the effective loading amount on the upstream side is increased in Example 1 as compared with Table 7 of Comparative Example 3. Therefore, as expected, the total effective loading amount can be increased in the case where two types of CO₂ sorbents are placed as compared with the case where one type of CO₂ sorbent is used as in Comparative Examples 2 and 3.
[Table 9]

**Table 9**

| CO₂ sorption amount and desorption amount when CO₂ partial pressure on downstream side from midstream portion is 100 kPa | | |
|---|---|---|
| | Upstream side | Downstream side from midstream portion |
| Sorption amount in sorption step | 0.95 mol/L | 0.63 mol/L |
| Sorption amount in regeneration step | 0.12 mol/L | 0.63 mol/L |
| Effective loading amount | 0.83 mol/L | 0.00 mol/L |

As the CO₂ sorbent A 101, an alkali metal oxide, an alkaline earth metal oxide, a lanthanoid oxide, a manganese oxide, alumina, titania, zirconia, yttria, a composite oxide thereof, or the like, which strongly binds to CO₂ is desirable.

On the other hand, as the CO₂ sorbent B 102, zeolite, carbon having a high-specific surface area, silica, an MOF (Molecular Organic Framework), a ZIF (Zeolitic Imidasolate Framework), an intercalation compound, or the like which weakly binds to CO₂ is desirable.

However, even if CO₂ sorbents having the same chemical composition are used as the two types of CO₂ sorbents, if there is the slightest difference in the desorption peak temperature due to a difference in the preparation method, the structure, etc., by placing a material having a higher desorption peak temperature on the downstream side as the CO₂ sorbent A 101, and a material having a lower desorption peak temperature on the upstream side as the CO₂ sorbent B 102, the CO₂ sorption amount can be increased as compared with the case where only one type of either CO₂ sorbent is used.

### [Example 2]

In Example 2, an example in which the following three types of CO₂ sorbents: a CO₂ sorbent A 108, a CO₂ sorbent B 109, and a CO₂ sorbent C 110 are placed in a CO₂ absorption tower 107 shown in Fig. 7 will be described.

In Fig. 7, on the left side, the CO₂ absorption tower 107 in the CO₂ sorption step is shown, and on the right side, the CO₂ absorption tower 107 in the CO₂ regeneration step is shown. These two steps are carried out by switching gas lines.

In the sorption step, a CO₂-containing gas flowing through a CO₂-containing gas line 111 flows in the CO₂ absorption tower 107. The CO₂-containing gas comes in contact with the CO₂ sorbent C 110, the CO₂ sorbent B 109, and the CO₂ sorbent A 108 to sorb CO₂, and is discharged through a CO₂-depleted gas line 104 as a CO₂-depleted gas. Further, in the regeneration step, a regeneration gas flows in the CO₂ absorption tower 107 through a regeneration gas line 113 and comes in contact with the CO₂ sorbent C 110, the CO₂ sorbent B 109, and the CO₂ sorbent A 108 to desorb CO₂, and the desorbed CO₂ is recovered through a CO₂ recovery line 114.

In the sorption step, by the reaction heat of the CO₂ sorption reaction, the temperature of the CO₂ sorbent A 108, the CO₂ sorbent B 109, and the CO₂ sorbent C 110 in the CO₂ absorption tower 107 is increased. The generated heat is transferred to the downstream side of the CO₂ absorption tower 107 by the flow of the CO₂-containing gas. Since the temperature on the downstream side is increased to higher temperature than on the upstream side, it is desirable that the CO₂ sorbent A 108 to be placed on the downstream side has a larger CO₂ sorption amount at high temperature than the CO₂ sorbent C 110 to be placed on the upstream side.

As the CO₂ sorbent A 108, the CO₂ sorbent B 109, and the CO₂ sorbent C 110, materials showing a temperature-programmed desorption curve as indicated in Figs. 8A to 8C are suitable. That is, by using a CO₂ sorbent having a peak temperature at which the CO₂ desorption amount reaches the maximum (hereinafter referred to as "desorption peak temperature") higher than the CO₂ sorbent C 110 to be placed on the upstream side as the CO₂ sorbent A 108 to be placed on the downstream side of the absorption tower, a decrease in CO₂ sorption amount can be prevented also on the downstream side where the temperature is increased to higher temperature than on the upstream side.

Due to the heat of the CO₂ sorption reaction by the CO₂ sorbent C 110 and the heat transfer by the gas, the temperature of the CO₂ sorbent B 109 is increased, however, the CO₂ sorbent B 109 has a higher CO₂ desorption peak temperature than the CO₂ sorbent C 110, and therefore has a larger CO₂ sorption amount than the CO₂ sorbent C 110. Due to the heat of the CO₂ sorption reaction by the CO₂ sorbent B 109 and the heat transfer by the gas, the temperature of the CO₂ sorbent A 108 is increased more than that of the CO₂ sorbent B 109, however, the CO₂ sorbent A 108 has a higher CO₂ desorption peak temperature than the CO₂ sorbent B 109, and therefore has a larger CO₂ sorption amount than the CO₂ sorbent B 109.

Further, even if the CO₂ sorbent A 108 is placed in place of the CO₂ sorbent B 109 to be placed on the midstream side, the CO₂ sorption amount at high temperature can be increased as compared with the case where the CO₂ sorbent C 110 is placed. However, the CO₂ desorption temperature is also increased and the energy required for regeneration is also increased, and therefore, it is desirable to use the CO₂ sorbent B 109.

Accordingly, by placing the CO₂ sorbents in ascending order of the desorption peak temperature from the upstream side to the downstream side of the CO₂ absorption tower 107, the CO₂ sorption amount can be increased while reducing the heat energy required for the regeneration step.

As shown in Fig. 7 and Figs. 8A to 8C, by placing the CO₂ sorbents in ascending order of the desorption peak temperature from the most upstream side to the downstream side of the absorption tower, the CO₂ sorption amount can be increased.

### [Example 3]

In Example 3, an example of a CO₂ capture and separation system, in which an increase in CO₂ partial pressure on the downstream side from the midstream portion due to the desorption of CO₂ from a CO₂ sorbent on the upstream side in the regeneration step is prevented, will be described.

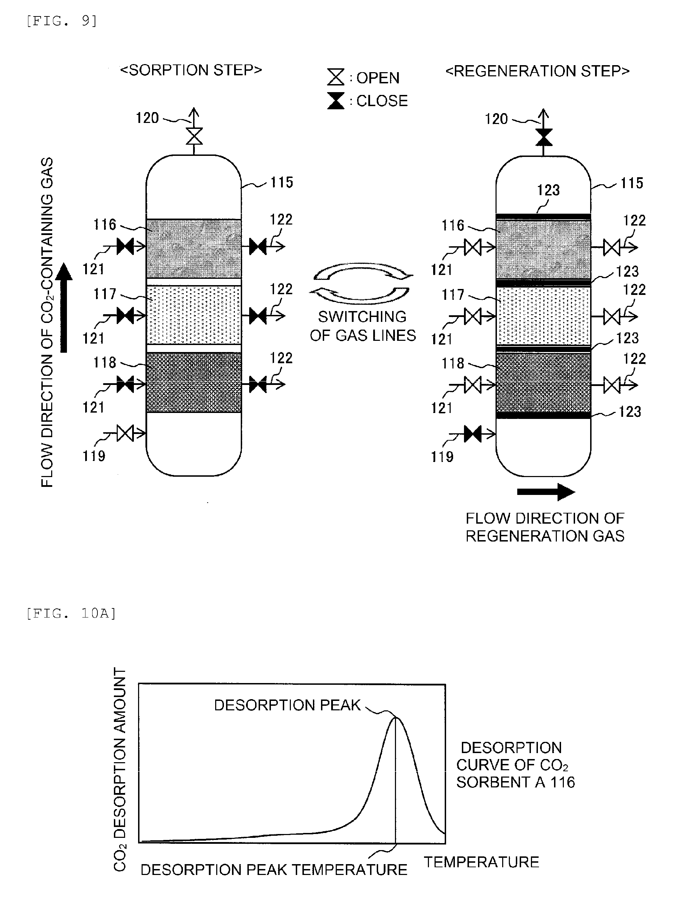

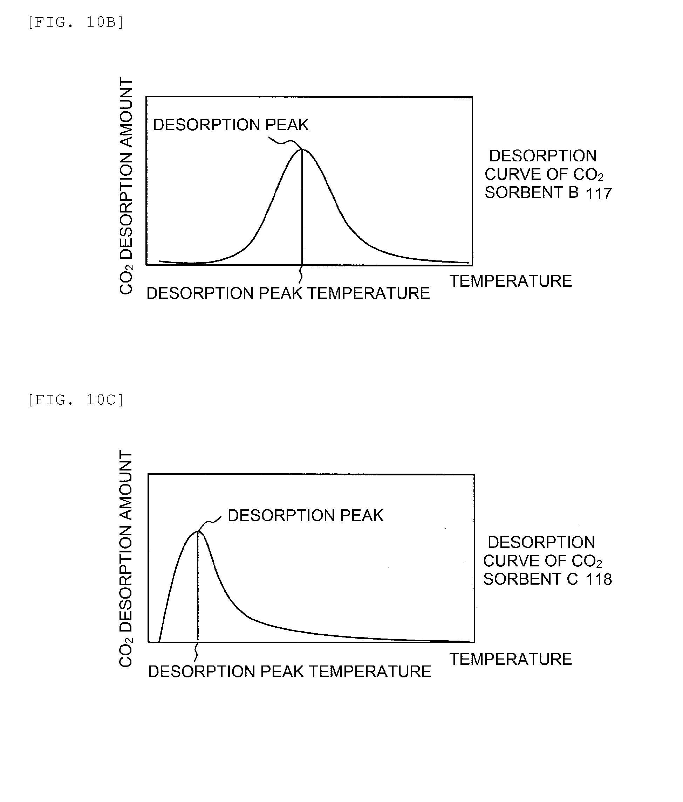

In Example 3 shown in Fig. 9, an example in which the following three types of CO₂ sorbents: a CO₂ sorbent A 116, a CO₂ sorbent B 117, and a CO₂ sorbent C 118 are placed in a CO₂ absorption tower 115 will be described. The desorption curves of these three types of CO₂ sorbents are shown in Figs. 10A to 10C. These are the same as those shown in Figs. 8A to 8C. In Fig. 6, in the sorption step, a CO₂-containing gas is circulated in the CO₂ absorption tower 115 through a CO₂-containing gas line 119, and a CO₂-depleted gas is discharged through a CO₂-depleted gas line 120.

In the regeneration step, a partition plate 123 is placed between each two of the sorbents, and a regeneration gas is circulated through a plurality of regeneration gas lines 121, and CO₂ is recovered through CO₂ recovery lines 122. However, this configuration is effective in the case where the inner diameter of the CO₂ absorption tower 115 is smaller than the length of the CO₂ sorbent filled layer in the CO₂ absorption tower 115. The partition plate 123 can be configured to be arbitrarily movable by providing a moving unit.

In Fig. 9, in the sorption step, a CO₂-containing gas is circulated in the CO₂ absorption tower 115 through the CO₂-containing gas line 119, and a CO₂-depleted gas is discharged through the CO₂-depleted gas line 120. In the regeneration step, a regeneration gas is circulated through the plurality of regeneration gas lines 121, and CO₂ is recovered through the CO₂ recovery lines 122. According to this configuration, the travel distance of CO₂ from the position where CO₂ is desorbed to the CO₂ recovery line 122 is decreased, so that the resorption of CO₂ on the CO₂ sorbent can be prevented.

By placing the partition plate 123 between each two of the CO₂ sorbents only during the regeneration step by the moving unit as a means for further preventing an increase in CO₂ partial pressure, the transfer of desorbed CO₂ is restricted, and therefore CO₂ can be rapidly recovered. The partition plate 123 is configured such that it can come in and out of the partitioning position by the moving unit (not shown).

Further, the number of sets of the regeneration gas line 121 and the CO₂ recovery line 122 is not necessary to be the same as the number of types of CO₂ sorbents, and any number of sets may be provided.

By utilizing this method, CO₂ desorbed in the regeneration step is rapidly recovered through the CO₂ recovery lines 122, and therefore, the time required for the regeneration step can be decreased.

In Example 3, it is also possible to configure the system such that various temperature sensors, pressure sensors, and the like are provided in regions where a plurality of CO₂ sorbents are placed, and the optimal CO₂ sorption conditions for the CO₂ sorbents in the respective regions are controlled by using a control device according to the outputs of the sensors. In this case, the optimal control for more accurate CO₂ sorption can be achieved.

### [Industrial Applicability]

In addition, not only for the capture and separation of CO₂, but also for the capture and separation of various types of gasses, for example, a hydrocarbon such as methane, hydrogen, oxygen, an alcohol, etc. , the invention can increase the amount of a gas which can be captured and separated by one set of the sorption step and the regeneration step by placing gas sorbents from the upstream side to the downstream side in ascending order of the desorption peak temperature of a gas species to be captured and separated.

### [Reference Sings List]

100, 107, 115: CO₂ absorption tower, 101, 108, 116: CO₂ sorbent A, 102, 109, 117: CO₂ sorbent B, 110, 118: CO₂ sorbent C, 125, 130: CO₂ sorbent, 103, 111, 119: CO₂-containing gas line, 104, 112, 120: CO₂-depleted gas line, 105, 113, 121: regeneration gas line, 106, 114, 122: CO₂ recovery line, 123: partition plate

## Claims

1. A carbon dioxide capture and separation system, in which carbon dioxide is captured and separated by circulating a carbon dioxide-containing gas through a carbon dioxide absorption tower including a carbon dioxide sorbent to sorb carbon dioxide, and thereafter circulating a regeneration gas, which is a gas other than carbon dioxide, through the carbon dioxide absorption tower to desorb carbon dioxide from the carbon dioxide sorbent, **characterized in that**
as the carbon dioxide sorbent, plural types of carbon dioxide sorbents, in which at least one of the temperature dependency of the carbon dioxide sorption amount and the carbon dioxide partial pressure dependency of the carbon dioxide sorption amount is different, are placed along the circulation direction of the carbon dioxide-containing gas from the upstream side to the downstream side of the carbon dioxide absorption tower.

2. The carbon dioxide capture and separation system according to claim 1, **characterized in that**
a desorption peak temperature at which the carbon dioxide desorption amount reaches the maximum is measured for each of the plural types of carbon dioxide sorbents under the same carbon dioxide partial pressure as that of the carbon dioxide-containing gas, and
the plural types of carbon dioxide sorbents are placed in ascending order of the desorption peak temperature from the upstream side to the downstream side in the circulation direction of the carbon dioxide-containing gas in the carbon dioxide absorption tower.

3. The carbon dioxide capture and separation system according to claim 1 or 2, **characterized in that**
among the plural types of carbon dioxide sorbents to be placed in the carbon dioxide absorption tower, the carbon dioxide sorbent having the largest effective loading amount (A-B), which is a difference between the carbon dioxide sorption amount A at the same temperature as that of the regeneration gas and the carbon dioxide sorption amount B at the same temperature as that of the carbon dioxide-containing gas under the conditions that the carbon dioxide partial pressure is the same as that of the carbon dioxide-containing gas, is placed on the most upstream side in the circulation direction of the carbon dioxide-containing gas,
the carbon dioxide sorbent having the largest effective loading amount (C-D), which is a difference between the carbon dioxide sorption amount C under the conditions that the carbon dioxide partial pressure is the same as that of the carbon dioxide-containing gas and the carbon dioxide sorbent temperature is 100°C and the carbon dioxide sorption amount D under the conditions that the carbon dioxide partial pressure is 50 kPa and the carbon dioxide sorbent temperature is the same as that of the regeneration gas, is placed on the most downstream side in the circulation direction of the carbon dioxide-containing gas, and
the other carbon dioxide sorbents are placed in descending order of the effective loading amount (C-D) from the downstream side to the upstream side in the circulation direction of the carbon dioxide-containing gas.

4. The carbon dioxide capture and separation system according to any one of claims 1 to 3, **characterized in that**
the carbon dioxide sorbent to be placed on the upstream side in the circulation direction of the carbon dioxide-containing gas is selected from at least one of zeolite, carbon having a high-specific surface area, silica, an MOF (Molecular Organic Framework), a ZIF (Zeolitic Imidasolate Framework), and an intercalation compound, and
the carbon dioxide sorbent to be placed on the downstream side in the circulation direction of the carbon dioxide-containing gas is selected from at least one of an alkali metal oxide, an alkaline earth metal oxide, a lanthanoid oxide, a manganese oxide, alumina, titania, zirconia, yttria, and a composite oxide thereof.

5. A carbon dioxide capture and separation system, in which carbon dioxide is captured and separated by circulating a carbon dioxide-containing gas through a carbon dioxide absorption tower including a carbon dioxide sorbent to sorb carbon dioxide, and thereafter circulating a regeneration gas, which is a gas other than carbon dioxide, through the carbon dioxide absorption tower to desorb carbon dioxide from the carbon dioxide sorbent, **characterized in that**
as the carbon dioxide sorbent, plural types of carbon dioxide sorbents, in which at least one of the temperature dependency of the carbon dioxide sorption amount and the carbon dioxide partial pressure dependency of the carbon dioxide sorption amount is different, are placed along the circulation direction of the carbon dioxide-containing gas from the upstream side to the downstream side of the carbon dioxide absorption tower, and
regeneration gas flow lines through which the regeneration gas flows in a regeneration step in which carbon dioxide is separated from the carbon dioxide sorbent and carbon dioxide recovery lines through which desorbed carbon dioxide is recovered are placed in a direction intersecting the circulation direction of the carbon dioxide-containing gas in the sorption step in the carbon dioxide absorption tower.

6. The carbon dioxide capture and separation system according to claim 5, **characterized in that**
a partition plate which separates the regeneration gas flowing through each regeneration gas line from the regeneration gas flowing through the other regeneration gas lines in the regeneration step is movably placed between each two of the plural carbon dioxide sorbents.
